# EUROPEAN PATENT APPLICATION

(11) **EP 2 107 497 A1**
(43) Date of publication of application: **07.10.2009**
(21) Application number: 09250524.7
(22) Date of filing: 26.02.2009
(51) Int. Cl.: G06K 7/10, G06K 7/00, G02B 27/01

(54) **Display processor and display processing system**

(30) Priority: 31.03.2008 JP 2008094076
(71) Applicant: Brother Kogyo Kabushiki Kaisha, Nagoya-shi, Aichi-ken 467-8561 (JP)
(72) Inventor: Matsubara, Yu, Nagoya-shi, Aichi 467-8561 (JP); Sakaue, Osamu, Nagoya-shi, Aichi 467-8561 (JP)
(74) Representative: Jackson, Martin Peter

(57) **Abstract**

There are provided a transparent display device (120) configured to be capable of giving a predetermined field of view (FV) including a natural image of a projection board (2) to the vision of an operator (M) and to be held on the head portion of the operator (M), an antenna (110) arranged in the vicinity of the projection board (2) and configured to carry out radio communication to at least one RFID tag (T) for display storing display data, respectively, that has at least one predetermined display image displayed in the field of view (FV), and a control circuit (133) configured to obtain image data via radio communication through the antenna (110) and to have the predetermined display image displayed by the display device (120) so as to be superimposed on the natural image of the projection board (2) in the field of view (FV) on the basis of the obtained image data.

## Description

### TECHNICAL FIELD

The present invention relates to a display processor and a display processing system configured to process image information that displays an image on a display device.

### BACKGROUND ART

A RFID (Radio Frequency Identification) system configured to read/write information between a small-sized RFID tag storing predetermined information and a reader (reading device)/writer (writing device) contactlessly has been proposed recently and is being put into practice in various fields.

As an example of practical use of the RFID system, a display processor configured to display corresponding images on the basis of information gotten by carrying out radio communication with a RFID tag can be cited (See JP, A, 2004-99278, for example). With this prior art, an operator wears a reader configured to get information of the RFID tag (luggage tag) provided at a search target (luggage) via radio communication and transparent display means (head-mount display) on the body and when the operator moves and the RFID tag enters a communication range of the reader, the information is gotten and checked if it is a search target corresponding to the operator or not, and the check result is displayed on the display

### DISCLOSURE OF THE INVENTION

### Problem to be solved by the Invention

The transparent display means used in the above prior art gives a field of view in which a created display image is superimposed on a natural image (not an image created by the display processor but a real image that can be visually recognized by the eyes of the operator through visible rays) to a vision of the operator. That is, in the vision of the operator, the check result if it is a search target corresponding to the operator or not is displayed being superimposed on the natural image. At this time, image processing considering superimposition on the natural image is not carried out in the above prior art. Therefore, in the vision of the operator, the display image created by the display processor and the natural image are independent from each other, and a sense as if the display image actually exists (virtual sense of substance) can not be given to the operator. Therefore, it is not necessarily convenient for the operator.

A hereinafter described embodiment provides a display processor and a display processing system that can improve convenience of an operator in article arrangement and information management by giving a virtual sense of substance as if the display image actually exists to the operator.

### BRIEF DESCRIPTION OF THE DRAWING

Fig. 1 is a system configuration diagram illustrating an entire configuration of a display processing system including a display processor of this embodiment.
Fig. 2 is a functional block diagram illustrating a functional configuration of the display processor.
Fig. 3 is a functional block diagram illustrating a detailed functional configuration of a display device.
Fig. 4 is a functional block diagram illustrating a detailed configuration of a radio frequency circuit.
Fig. 5 is a functional block diagram illustrating an example of functional configuration of a RFID circuit element.
Fig. 6 is a front view illustrating an entire structure of a desk used by an operator.
Fig. 7 is a diagram illustrating contents of image data associated with a tag ID of each RFID circuit element of a RFID tag for display.
Figs. 8A to 8D are diagrams illustrating contents of display position information corresponding to a display position of each image data.
Fig. 9 is a diagram illustrating a field of view given by the display device to the vision of the operator when all the RFID tags for display are detected through an antenna of the display processor.
Fig. 10 is a diagram illustrating a field of view given by the display device to the vision of the operator if the operator moves the field of view from the state shown in Fig. 9 to the right direction in Fig. 9.
Fig. 11 is a diagram illustrating a field of view given by the display device to the vision of the operator if the operator gets close to a projection board from the state shown in Fig. 10.
Fig. 12 is a flowchart illustrating control contents executed by a control circuit of the display processor.
Figs. 13A and 13B are a diagram illustrating a field of view given by the display device to the vision of the operator, who is a user of the desk and a diagram illustrating a field of view given by the display device to the vision of the operator, who is not the user of the desk, respectively, in a variation in which the operator is identified.
Fig. 14 is a flowchart illustrating control contents executed by the control circuit of the display processor in the variation in which the operator is identified.
Fig. 15 is a diagram illustrating an example of arrangement of image data in a field of view given by the display device to the vision of the operator.
Fig. 16 is a diagram conceptually illustrating a configuration of a reflection type head-mount display, which is an example of another display device.

### BEST MODE FOR CARRYING OUT THE INVENTION

An embodiment of the present invention will be described below referring to the attached drawings. In this embodiment, a display processing system of the present invention is applied to a display processing system configured to display image data superimposed on a projection board provided at a desk.

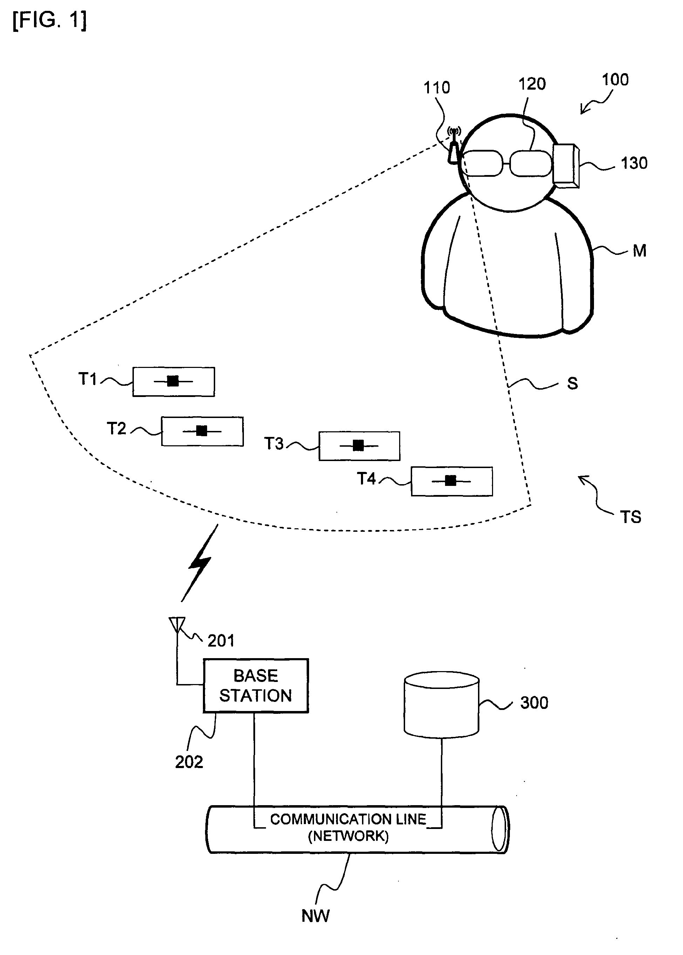

Fig. 1 is a system configuration diagram illustrating an entire configuration of a display processing system TS including a display processor 100 of this embodiment.

In Fig. 1, the display processing system TS has the display processor 100 held by an operator M, a base station 202 capable of information transmission/reception through an antenna 201 with the display processor 100 via radio communication such as a wireless LAN, and a database 300 connected to the base station 202 through a communication line NW.

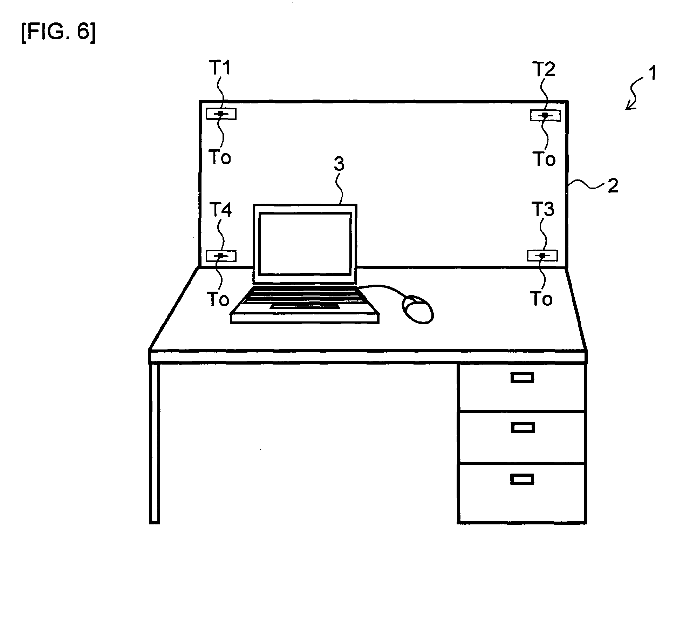

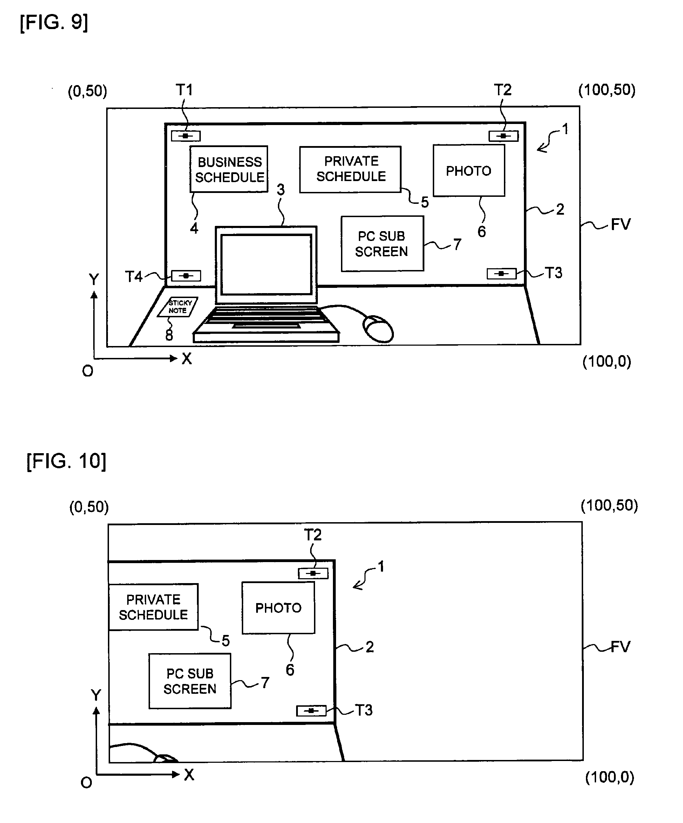

The display processor 100 has a display device 120 that can give a predetermined field of view FV (See Fig. 9 and the like, which will be described later) including a natural image to the vision of an operator M, an antenna 110 (antenna means) arranged in the vicinity (four corners of a board in this embodiment) of a projection board 2 (See Fig. 6, which will be described later) provided at a desk 1 (See Fig. 6, which will be described later) and provided with predetermined directivity for radio communication with at least a single RFID tag T for display (four RFID tags T1 to T4 for display in this embodiment. See Fig. 6, which will be described later) storing a tag ID (image related information. Associated with image data) for displaying predetermined image data in the field of view FV and display position information indicating a display position of the image data, respectively, and a control device 130 configured to carry out radio communication control with the RFID tag T for display through the antenna 110 and display control by the display device 120. The antenna 110, the display device 120, and the control device 130 are held by the head portion of the operator M.

The display device 120 (display means) is provided with a so-called wearable type transparent display that can be worn on the body of the operator M, and the operator M can see a natural image (not an image created by the display device 120 but a real image visually recognized by the yees of the operator M through visible rays) of an article (including all the targets that can be visually recognized by the eyes of the operator M through visible rays such as articles and persons other than the desk 1 or the projection board 2) in the field of view FV, transmitted through the display, and can see a display image created by the display device 120 superimposed on the natural image in the field of view FV. In this embodiment, a retinal scanning display is used as the display device 120 (the details will be described later).

The directivity of the antenna 110 is set fixedly so as to be oriented to the same direction as that of the display device 120. As a result, in a state where the operator M wears the display device 120 on the face, the directivity of the antenna 110 is in the same direction as that of the face of the operator M, and as shown in Fig. 1, a communication region S in a predetermined range is created in the same direction as that of the face of the operator M along the directivity.

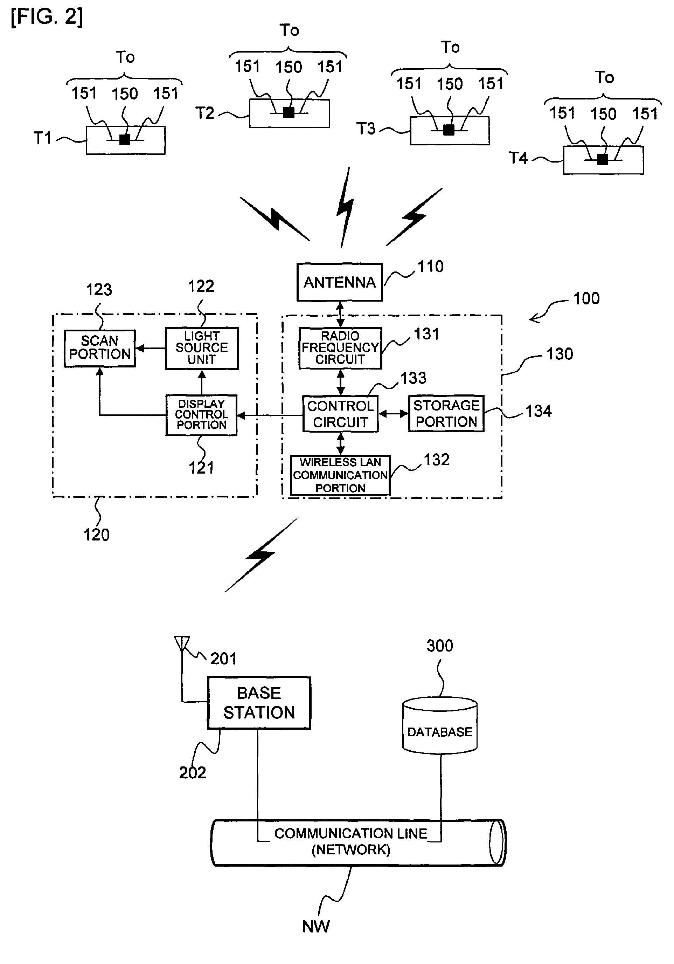

Fig. 2 is a functional block diagram illustrating a functional configuration of the display processor 100.

Each of the RFID tags T1 to T4 for display provided at the projection board 2 of the desk 1 has a RFID circuit element To provided with an IC circuit part 150 storing information and a tag antenna 151 connected to this IC circuit part 150.

The control device 130 has a radio frequency circuit 131 configured to access the RFID circuit element To of the RFID tag T for display through the antenna 110 via radio communication and process a signal read out from the RFID circuit element To, a wireless LAN communication portion 132 configured to carry out communication with the base station 202 through the antenna 201 via wireless LAN, a control circuit 133 configured to carry out control of the entire display processor 100 including the radio frequency circuit 131, the wireless LAN communication portion 132, and the display device 120, and a storage portion 134 (RAM and the like) connected to the control circuit 133 and capable of reading/writing information.

The display device 120 is a retinal scanning display as mentioned above and has a display control portion 121 configured to carry out control of a light source unit 122 and a scanning portion 123, which will be described later, on the basis of a control signal from the control circuit 133 of the control device 130, the light source unit 122 having a light source emitting light on the basis of a control signal from the display control portion 121, and a scanning portion 123 configured to apply modulation to a wavefront curvature of outgoing light of the light source unit 122 and to carry out scanning in the horizontal and perpendicular directions on the basis of a control signal from the display control portion 121 and to irradiate a pupil of the operator M with a light flux while changing an incident angle thereof.

The database 300 is constituted by a hard disk or a large-capacity memory and the like, for example, and stores tag IDs of each RFID circuit element To of the RFID tags T1 to T4 for display and the image data (image information) that displays a predetermined display image in the above-mentioned field of view FV corresponding to each tag ID, respectively, in association with each other. The database 300 is capable of information transmission/reception with the control circuit 133 of the display processor 100 via communication by wireless LAN through the communication line NW, the base station 202, and the antenna 201. As a result, when the information (tag ID) is read out from the RFID tag T for display through the antenna 110 in the display processor 100, search is made for the image data relating to the tag ID in the database 300 so that the applicable image data can be obtained by the display processor 100 through the communication line NW, the base station 202, and the antenna 201.

The database 300 is configured to be provided separately from the display processor 100 in the above, but not limited to that, the display processor 100 may have the database 300.

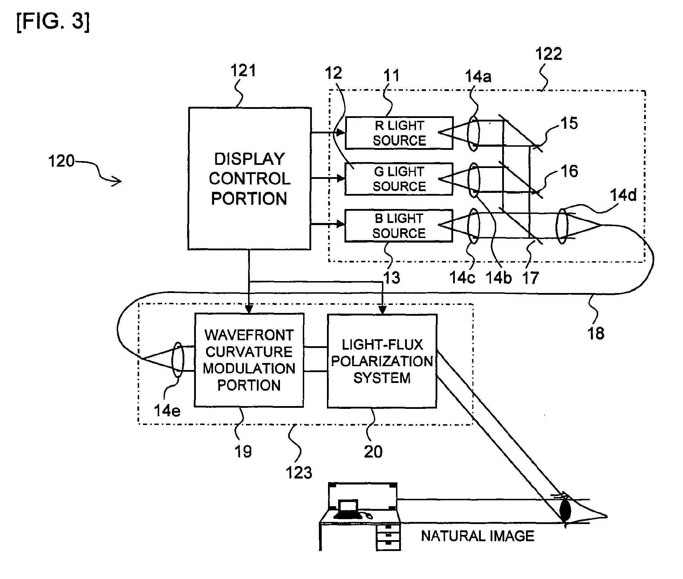

Fig. 3 is a functional block diagram illustrating a detailed functional configuration of the display device 120.

In Fig. 3, the display control portion 121 calculates display image data on the basis of a control signal from the control circuit 133 and creates an intensity modulation signal to an R light source 11, a G light source 12, and a B light source 13, a control signal to a wavefront curvature modulation portion 19, and a synchronization signal to a light-flux polarization system 20 and the like. Algorithms of the various calculations are known arts usually used in the computer graphics field, and the description is omitted here. Outgoing light from each of the R, G, B light sources 11, 12, 13 is formed into a substantially parallel light flux by collimate lenses 14a, 14b, 14c and then, multiplexed by wavelength selective mirrors 15, 16, 17 and made to enter one end of an optical fiber 18 by a focus lens 14d. Outgoing light from the other end of the optical fiber 18 is converted to a substantially parallel light flux by a collimate lens 14e and made to enter the wavefront curvature modulation portion 19. The wavefront curvature modulation portion 19 applies modulation to a wavefront curvature (parallelism) of an incident light flux according to a control signal from the display control portion 121. An outgoing light flux from the wavefront curvature modulation portion 19 is made to enter the light-flux polarization system 20. The light-flux polarization system 20 irradiates the pupil of the operator M with a light flux while changing an incident angle thereof by a plurality of lenses and polygon mirrors, not shown.

The display device 120 is provided with two optical systems configured as above and supplies a light flux to the both eyes of the operator M. As a result, the operator M can see a natural image of the article (the desk 1 or the projection board 2 and the like) in the field of view FV, transmitted through the display, and can see a display image visualized by irradiation to the pupils carried out as above in the field of view FV of the display device 120, superimposed on the natural image.

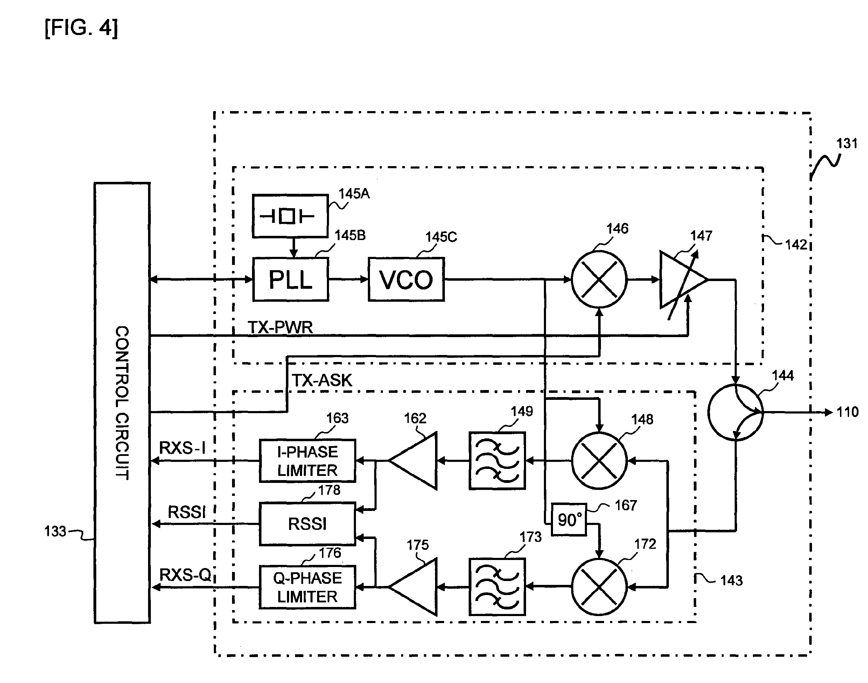

Fig. 4 is a functional block diagram illustrating a detailed configuration of the radio frequency circuit 131.

In Fig. 4, the radio frequency circuit 131 accesses information in the IC circuit 150 of the RFID circuit element To through the antenna 110, and the control circuit 133 of the display processor 100 processes a signal read out from the IC circuit part 150 of the RFID circuit element To and reads out information and creates various commands for making an access to the IC circuit part 150 of the RFID circuit element To.

The radio frequency circuit 131 is constituted by a transmitting portion 142 configured to transmit a signal to the RFID circuit element To through the antenna 110, a receiving portion 143 configured to input a response wave from the RFID circuit element To received by the antenna 110, and a transmit-receive splitter 144.

The transmitting portion 142 is a block configured to create an interrogation wave to make an access to RFID tag information of the IC circuit part 150 of the RFID circuit element To. That is, the transmitting portion 142 is provided with a crystal oscillator 145A configured to output a reference signal of a frequency, a PLL (Phase Locked Loop) 145B and a VCO (Voltage Controlled Oscillator) 145C configured to divide/multiply frequency of the output of the crystal oscillator 145A by means of control of the control circuit 133 so as to generate a carrier wave with a predetermined frequency, a transmission multiplying circuit 146 (however, in the case of amplitude modulation, it may be replaced by an amplitude factor variable amplifier or the like) configured to modulate (in this example, amplitude modulation based on the "TX_ASK" signal from the control circuit 133) the carrier wave generated as above on the basis of a signal supplied from the control circuit 133, and a variable transmission amplifier 147 configured to amplify the modulated waves modulated by the transmission multiplying circuit 146 (with an amplification factor determined according to a "TX_PWR" signal from the control circuit 133 in this example) so as to create a desired interrogation wave. The carrier wave generated as above uses a frequency of a UHF band (or microwave band or a short-wave band), for example, and the output from the variable transmission amplifier 147 is transmitted to the antenna 110 through the transmit-receive splitter 144 and is supplied to the IC circuit part 150 of the RFID circuit element To. The interrogation wave is not limited to a signal modulated as above (modulated wave) but may be a mere carrier wave depending on the case.

The receiving portion 143 is provided with an I-phase receiving signal multiplying circuit 148 that multiplies and demodulates a response wave from the RFID circuit element To received by the antenna 110 by the carrier wave as described above, an I-phase bandpass filter 149 that extracts only the signals in the necessary band from the output of the I-phase receiving signal multiplying circuit 148, an I-phase receiving signal amplifier 162 that amplifies the output from the I-phase bandpass filter 149, an I-phase limiter 163 that further amplifies the output of the I-phase receiving signal amplifier 162 and converts it to a digital signal, a Q-phase receiving signal multiplying circuit 172 that multiplies the response wave from the RFID circuit element To received at the antenna 110 by a signal obtained by delaying the phase of the carrier wave by a phase shifter 167 by 90°, a Q-phase bandpass filter 173 that extracts only the signals in the necessary band from the output of the Q-phase receiving signal multiplying circuit 172, a Q-phase receiving signal amplifier 175 that amplifies the output of the Q-phase bandpass filter 173, and a Q-phase limiter 176 that further amplifies the output of the Q-phase receiving signal amplifier 175 and converts it to a digital signal. A signal "RXS-I" output from the I-phase limiter 163 and a signal "RXS-Q" output from the Q-phase limiter 176 are input to the control circuit 133 for processing.

Also, the outputs from the I-phase receiving signal amplifier 162 and the Q-phase receiving signal amplifier 175 are input to an RSSI (Received Signal Strength Indicator) circuit 178 as intensity detection means and a signal "RSSI" indicating the intensity of these signals is input to the control circuit 133. As a result, the display processor 100 can detect receiving intensity of a signal from the RFID circuit element To during communication with the RFID circuit element To.

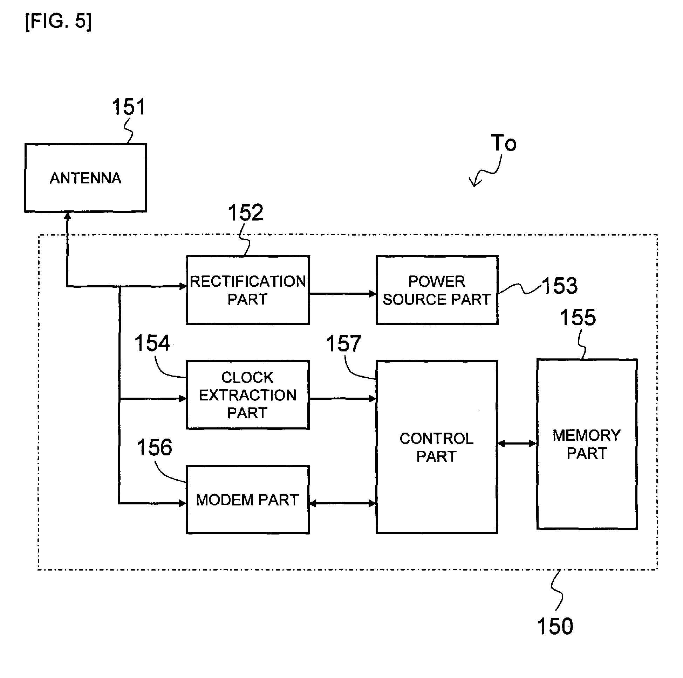

Fig. 5 is a functional block diagram illustrating an example of functional configuration of the RFID circuit element To.

In Fig. 5, the RFID circuit element To has the tag antenna 151 for transmission/reception of a signal contactlessly with the antenna 110 of the display processor 100 and the IC circuit part 150 connected to the tag antenna 151 as described above.

The IC circuit part 150 includes a rectification part 152 that rectifies an interrogation wave received by the tag antenna 151, a power source part 153 that accumulates energy of the interrogation wave rectified by the rectification part 152 so as to make it a driving power supply, a clock extraction part 154 that extracts a clock signal from the interrogation wave received by the tag antenna 151 so as to supply it to a control part 157, a memory part 155 that can store a predetermined information signal, a modem part 156 connected to the tag antenna 151, and the control part 157 that controls operation of the RFID circuit element To through the memory part 155, the clock extraction part 154, the modem part 156 and the like.

The modem part 156 demodulates an interrogation wave from the antenna 110 of the display processor 100 received by the tag antenna 151 and modulates a reply signal from the control part 157 and transmits it as a response wave (signal including a tag ID) from the tag antenna 151.

The clock extraction part 154 extracts a clock component from a received signal and supplies a clock corresponding to a frequency of the clock component to the control part 157.

The control part 157 interprets a received signal demodulated by the modem part 156, creates a reply signal on the basis of the information signal stored in the memory part 155, and executes basic control such as control to return a reply signal from the tag antenna 151 by the modem part 156.

Fig. 6 is a front view illustrating an entire structure of the desk 1 used by the operator M.

As shown in Fig. 6, the desk 1 has a projection board 2 (virtual projection portion), and as described above, the four RFID tags T1 to T4 for display are arranged at four corners of the projection board 2, respectively. The surface of the projection board 2 is structured to be covered by a white screen, for example, which is a structure suitable for virtual projection of a display image created by the display device 120 of the display processor 100 (in other words, giving a field of view FV in which the display image is superimposed on the natural image of the projection board 2 to the vision of the operator M) . On the desk 1, a PC terminal 3 used by the operator M is placed.

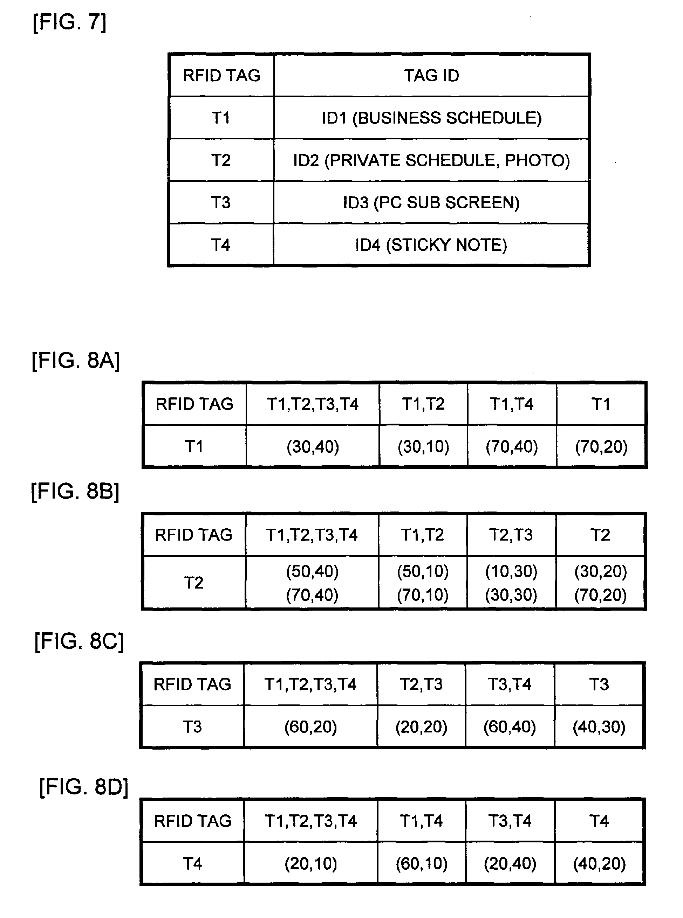

Fig. 7 and Figs. 8A to 8D are diagrams illustrating stored contents of the memory part 155 in each RFID circuit element To of the RFID tags T1 to T4 for display, in which Fig. 7 is a diagram illustrating the contents of image data associated with the tag ID of each RFID circuit element To of the RFID tags T1 to T4 for display, respectively, and Figs. 8A to 8D are diagrams illustrating the contents of display position information corresponding to a display position of each image data.

In Fig. 7, each RFID circuit element To of the RFID tags T1 to T4 for display stores ID1, ID2, ID3 and ID4, respectively, as the tag ID. The ID1, ID2, ID3 and ID4 as each of the tag IDs is associated with image data of a business schedule of the operator M, a private schedule and photo (photos relating to private such as family photos, photos of favorite landscapes of the operator M and the like, for example), a PC sub screen (screen for displaying appropriate information for assisting a work by the operator M using the PC terminal 3), a sticky note (with appropriate information written), respectively, and each image data associated with the ID1, ID2, ID3 and ID4, respectively, is stored in the database 300.

In Fig.8, each RFID circuit element To of the RFID tags T1 to T4 for display stores the display position information along with the tag ID, respectively. The display position information is represented by coordinates in the above-mentioned field of view FV given by the display device 120 (See Fig. 9 and the like, which will be described later) and stores a plurality of different coordinates according to the type of the RFID tag detected at the same time (in other words, the RFID tags present at the same time in the communication region S). In the case of the RFID tag T1 for display, for example, as shown in Fig. 8A, four types of coordinates for a case in which all the RFID tags T1 to T4 for display are detected, a case in which only the RFID tags T1 and T2 for display are detected, a case in which only the RFID tags T1 and T4 for display are detected, and a case in which only the RFID tag T1 for display is detected are stored. Since it is not likely that only the RFID tags T1 and T3 (or T2 and T4) for display are detected from its positional relation, the case is not set here.

Similarly, in the case of the RFID tag T2 for display, as shown in Fig. 8B, four types of coordinates for a case in which all the RFID tags T1 to T4 for display are detected, a case in which only the RFID tags T1 and T2 for display are detected, a case in which only the RFID tags T2 and T3 for display are detected, and a case in which only the RFID tag T2 for display is detected are stored. The coordinates are described in upper and lower two stages in Fig. 8B since the RFID tag T2 for display corresponds to two images of the private schedule and the photo as mentioned above, in which the coordinates on the upper stage corresponds to the private schedule and the coordinates on the lower stage to the photo. In the case of the RFID tag T3 for display, as shown in Fig. 8C, four types of coordinates for a case in which all the RFID tags T1 to T4 for display are detected, a case in which only the RFID tags T2 and T3 for display are detected, a case in which only the RFID tags T3 and T4 for display are detected, and a case in which only the RFID tag T3 for display is detected are stored. In the case of the RFID tag T4 for display, as shown in Fig. 8D, four types of coordinates for a case in which all the RFID tags T1 to T4 for display are detected, a case in which only the RFID tags T1 and T4 for display are detected, a case in which only the RFID tags T3 and T4 for display are detected, and a case in which only the RFID tag T4 for display is detected are stored, respectively.

Fig. 9 is a diagram illustrating the field of view FV given by the display device 120 to the vision of the operator M if all the RFID tags T1 to T4 for display are detected through the antenna 110 of the display processor 110 (in other words, if all the RFID tags T1 to T4 are present in the communication region S). In the following, the coordinates in the field of view FV are constituted by an XY coordinate system with the lower left apex in the substantially rectangular field of view FV as the origin O (0, 0), with the coordinates of the lower right apex in the field of view FV as (100, 0), the coordinates of the upper left apex as (0, 50), and the coordinates of the upper right apex as (100, 50).

As shown in Fig. 9, in the projection board 2 of the desk 1, the image data 4 of the business schedule associated with the RFID tag T1 for display (hereinafter described simply as "business schedule 4") is displayed at a display position (coordinates (30, 40) in the field of view FV. See Fig. 8A) if all the RFID tags T1 to T4 for display are detected. Also, image data 5 of the private schedule associated with the RFID tag T2 for display (hereinafter described simply as "private schedule 5") and image data 6 of the photo (hereinafter described simply as "photo 6") are displayed at the display positions, respectively, (coordinates (50, 40) and (70, 40) in the field of view FV. See Fig. 8B) if all the RFID tags T1 to T4 for display are detected. Also, image data 7 of the PC sub screen associated with the RFID tag T3 for display (hereinafter described simply as "PC sub screen 7") is displayed at the display position (coordinates (60, 20) in the field of view FV. See Fig. 8C) if all the RFID tags T1 to T4 for display are detected. Also, image data 8 of the sticky note associated with the RFID tag T4 for display (hereinafter described simply as "sticky note 8") is displayed at the display position (coordinates (20, 10) in the field of view FV. See Fig. 8D) if all the RFID tags T1 to T4 for display are detected.

Each of the image data 4 to 8 is displayed so that the center position of each of the image data 4 to 8 (or may be other positions such as an apex of the four corners) matches each coordinate of the display position information. Also, the display size of each of the image data 4 to 8 is displayed, respectively, in the size according to a distance from the operator M (or more accurately, the antenna 110. The same applies to the following) to each of the RFID tags T1 to T4 for display on the basis of intensity of a receiving signal from each of the RFID tags T1 to T4 for display (in other words, a distance from the operator M to the projection board 2). The display size of the image data at this time may be determined by calculation each time according to the intensity of the receiving signal (or the distance from the operator M to each of the RFID tag T for display), or the display size of the image data and the intensity of the receiving signal (or the distance from the operator M to each of the RFID tags T for display) may be stored as a table in advance in the storage portion 134, for example, in association in stages so that the display size can be determined by referring to the table.

Fig. 10 is a diagram illustrating the field of view FV given by the display device 120 to the vision of the operator M if only the RFID tags T2 and T3 for display are detected through the antenna 110 of the display processor 100 (in other words, if only the RFID tags T2 and T3 for display are present in the communication region S) as the result of movement of the field of view FV by the operator M from the state shown in Fig. 9 to the right direction in Fig. 9.

As shown in Fig. 10, in the projection board 2 of the desk 1, the private schedule 5 and the photo 6 associated with the RFID tag T2 for display are displayed, respectively, at display positions (coordinates (10, 30) and (30, 30) in the field of view FV. See Fig. 8B) if only the RFID tags T2 and T3 for display are detected. Also, the PC sub screen 7 associated with the RFID tag T3 for display is displayed at at display position (coordinates (20, 20) in the field of view FV. See Fig. 8C) if only the RFID tags T2 and T3 for display are detected.

Since the distance from the operator M to the RFID tag T2, T3 for display is equal to that in the case of Fig. 9, the image data 5 to 7 at this time is displayed with the same size as in Fig. 9, respectively. In the example shown in Fig. 10, a portion sticking out of the field of view FV of the private schedule 5 (left end portion) is not displayed, but it may be so configured that for the image partially sticking out of the field of view FV, the entire image may not be displayed or the coordinates may be changed so that the entire image can be contained in the field of view FV.

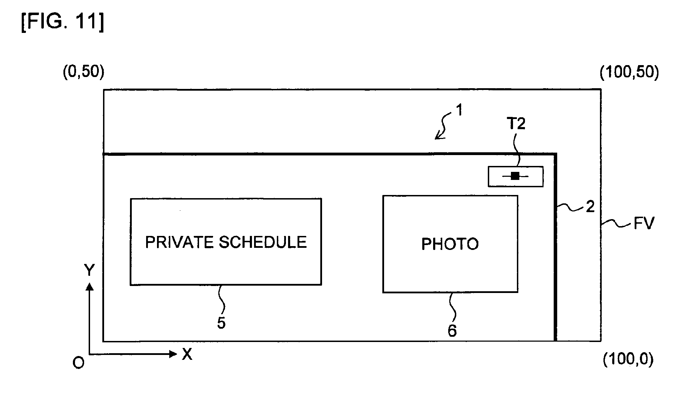

Fig. 11 is a diagram illustrating the field of view FV given by the display device 120 to the vision of the operator M if only the RFID tag T2 for display is detected through the antenna 110 of the display processor 100 (in other words, only the RFID tag T2 for display is present in the communication range S) as the result of approach by the operator M to the projection board 2 from the state shown in Fig. 10.

As shown in Fig. 11, in the projection board 2 of the desk 1, the private schedule 5 and the photo 6 associated with the RFID tag T2 for display is displayed, respectively, at display positions (coordinates (30, 20) and (70, 20) in the field of view FV. See Fig. 8B) if only the RFID tag T2 for display is detected. Also, as for the display size of each of the image data 5, 6 at this time, since the distance from the operator M to the RFID tag T2 for display is detected to become closer than the case shown in Figs. 9 and 10 on the basis of the intensity of the receiving signal from the RFID tag T2 for display, they are displayed in a magnified manner than the case in Figs. 9 and 10, respectively.

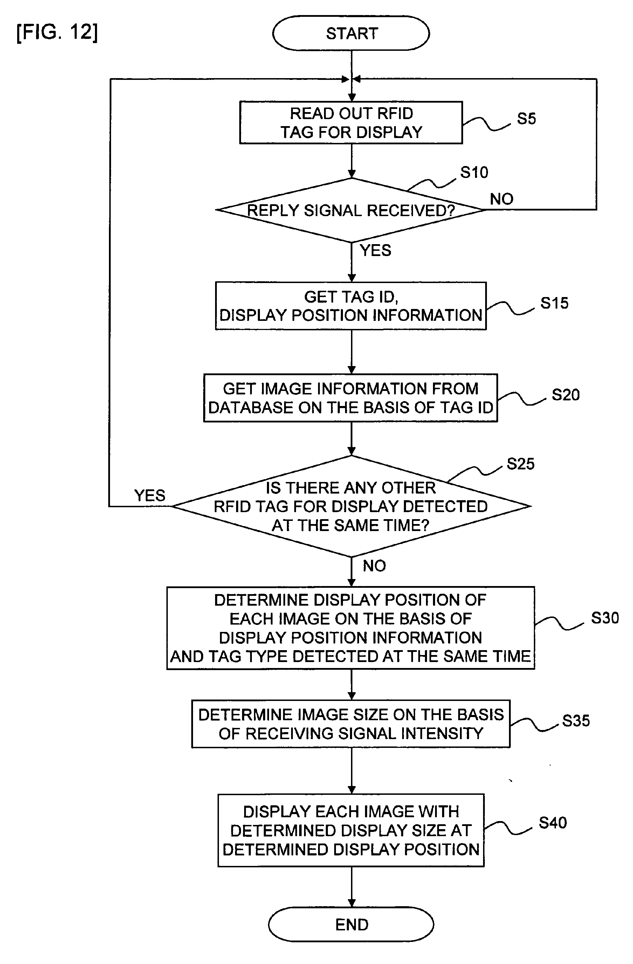

Fig. 12 is a flowchart illustrating control contents executed by the control circuit 133 of the display processor 100.

At Step S5, the control circuit 133 transmits a control signal to the transmitting portion 142 of the radio frequency circuit 131 so as to generate a carrier wave in a UHF band (915 MHz, for example) from the crystal oscillator 145A, the PLL 145B, and the VCO 145C, for exmaple, modulates and amplifies the carrier wave generated on the basis of the control signal and transmits a read-out signal to the IC circuit part 150 of the RFID circuit element To in the RFID tag T for display present in the communication region S through the transmit-receive splitter 144 and the antenna 110.

At Step S10, the control circuit 133 determines if a reply signal (response signal) corresponding to the read-out signal from the IC circuit part 150 of the RFID circuit element To in the RFID tag T for display present in the communication region S has been received or not. If the signal has not been received, the determination is not satisfied, and the routine returns to Step S5. On the other hand, if the signal has been received, the determination is satisfied, and the routine goes to Step S15.

At step S15, the control circuit 133 gets the tag ID and the display position information stored in the IC circuit part 150 of the RFID circuit element To in the corresponding RFID tag T for display on the basis of the reply signal received at Step S10.

At Step S20, the control circuit 133 accesses the database 300 through the wireless LAN communication, the base station 202, and the communication line NW, searches the database 300 and obtains the image data relating to the tag ID obtained at Step S15.

At Step S25, the control circuit 133 determines if there is another RFID tag T for display detected at the same time by information reading out at Step S5 and Step S10 (in other words, the RFID tag T for display present at the same time in the communication region S) other than the RFID tag T for display for which the image data has been obtained or not. If another RFID tag T for display is present, the determination is satisfied and the routine returns to the previous Step S5, where the information reading-out is carried out again. On the other hand, if another RFID tag T is not present, the determination is not satisfied but the routine goes to Step S30.

At Step S30, the control circuit 133 determines the display position of the image data according to the display position information gotten at Step S15 and the type of the RFID tag T for display detected at the same time (See the above-mentioned Fig. 8).

At Step S35, the control circuit 133 detects the receiving signal intensity of the reply signal received at Step S10 on the basis of the signal "RSSI" indicating the intensity of the signal input from the above-mentioned RSSI circuit 178 and determines the display size of the image data on the basis of the receiving signal intensity. As mentioned above, the display size of the image data at this time may be determined by calculation each time according to the receiving signal intensity or it may be so configured that the display size of the image data and the receiving signal intensity (or the distance from the operator M to each RFID tag T for display) are stored as a table in advance in association so that the display size can be determined by referring to the table.

At Step S40, the control circuit 133 outputs a display signal to the display control portion 121 of the display device 120 on the basis of the image data obtained at Step S20 and the display position and the display size determined at Step S30 and Step S35. As a result, the display control portion 121 outputs a control signal to the light-source unit 122 and the scanning portion 123, and outgoing light from the light source is modulated/scanned and irradiated to the pupil of the operator M while the incident angle thereof is changed. As a result, in the field of view FV of the display device 120, the image data is visualized and displayed. Then, this flow is finished.

In the above, Step S15 constitutes first information acquisition means configured to get image related information via radio communication through the antenna means described in each claim and constitutes tag identification information acquisition means configured to get tag identification information via radio communication, and Step S20 constitutes image information acquisition means configured to get corresponding image information by accessing the database on the basis of the tag identification information gotten by the tag identification information acquisition means.

Also, Step S30 and Step S35 constitute display mode control means configured to create a display signal so that a display position and a display size of a predetermined display image in a predetermined field of view may change according to a distance or a direction from the operator of the virtual projection portion, and Step S30, Step S35 and Step S40 constitute display signal creating means configured to create a display signal for having a predetermined display image superimposed on a natural image of the virtual projection portion by the display means in a predetermined field of view on the basis of the image related information gotten by the first information acquisition means.

In the embodiment as described above, the operator M wears and holds the transparent display device 120 on the head portion. In the field of view FV of the operator M seen in the display device 120, a natural image of the projection board 2 is included. At this time, at least one RFID tag T for display is provided in the projection board 2. The RFID circuit element To of the RFID tag T for display stores the tag ID associated with the image data, and the tag ID is obtained from the RFID tag T for display via radio communication through the antenna 110. On the basis of the display signal created based on the image data associated with the obtained tag ID, in the field of view FV of the operator M in the display device 120, the predetermined display image corresponding to the image data is displayed in superimposition on the natural image of the projection board 2.

That is, in the field of view FV of the operator M, the predetermined image corresponding to the information read-out from the RFID tag T for display can be displayed on the natural image of the projection board 2. As a result, a sense as if a predetermined article corresponding to a predetermined image is arranged (a sense of virtual article arrangement) on the projection board 2 can be given to the operator M. Therefore, even though the article is not actually arranged, handling or processing similar to the actual arrangement can be electronically conducted. As a result, convenience of the operator M in article arrangement and information management can be improved. Also, various expansion and application such as sharing of the projection board 2 by a plurality of the operators M can be realized.

Also, particularly in this embodiment, in the display processor 100, the display position information stored in the RFID circuit element To of the RFID tag T for display is gotten through the antenna 110. As a result, when predetermined image data corresponding to the information read-out of the RFID tag T for display is displayed in the field of view FV of the operator M, at what position in the field of view FV the image data is to be displayed can be set for each image. That is, an arrangement position in the virtual sense of article arrangement of the operator M can be set. As a result, the convenience of the operator M can be further improved.

Also, particularly in this embodiment, in the display processor 100, the display position and the display size of the image data in the field of view FV are changed according to the distance or the direction of the projection board 2 from the operator M. As a result, if the operator M gets close to the projection board 2 and the distance becomes short, for exmaple, the image data in the field of view FV can be enlarged according to that, while if the direction of the operator M (display processor 100) to the projection board 2 is changed and the operator M is directed to a local portion of the projection board 2, the display of the image data in the field of view FV can be moved laterally or the like corresponding to that. As a result, a visual effect similar to the case in which the operator M gets close to or changes the direction when a real article is arranged can be given, and the virtual sense of article arrangement for the operator M can be maintained.

Also, particularly in this embodiment, the plurality of RFID tags T1 to T4 for display are arranged at predetermined positions (four corners in this embodiment) on the projection board 2, and according to the information acquisition result of each of the RFID tags T1 to T4 for display (whether the information read-out has been successful or how about the receiving signal intensity and the like), the display mode (display position and display size) of the image in the field of view FV of the operator M is changed. As a result, the positional relation between the projection board 2 and the operator M is indirectly detected, and according to the result, the display mode (display position and display size) can be changed and the virtual sense of article arrangement for the operator M can be maintained.

Also, particularly in this embodiment, in the display processor 100, if the positions of the RFID tags T1 to T4 for display are deviated from the range of directivity of the antenna 110 (communication region S) to some degree, information acquisition by the display processor 100 becomes impossible. Therefore, by detecting whether the information could be gotten by the display processor 100 in each of the plurality of RFID tags T1 to T4 for display or not, the direction of the operator M to the projection board 2 can be indirectly detected. As a result, by changing the display position of the image data in the field of view FV of the operator M on the basis of the information acquisition result, the virtual sense of article arrangement for the operator M can be surely maintained.

Also, particularly in this embodiment, in the radio communication with the RFID tags T1 to T4 for display, the farther the distance from the antenna 110 is, the smaller the receiving signal intensity at the antenna 110 becomes. Therefore, when the information can be gotten through the antenna 110 from the RFID tags T1 to T4 for display, the distance between the projection board 2 and the operator M can be indirectly detected by detecting how the receiving signal intensity was. As a result, by changing the display size of the image data in the field of view FV of the operator M on the basis of the receiving signal intensity, the virtual sense of article arrangement for the operator M can be surely maintained.

The present invention is not limited to the above embodiment but is capable of various variations in a range not departing from its gist and technical idea. Such variations will be described below in order.

### (1) When an operator is to be identified:

Though a particular consideration is not given in the above embodiment, it may be so configured that an operator is identified and the display contents are changed according to the operator, for example.

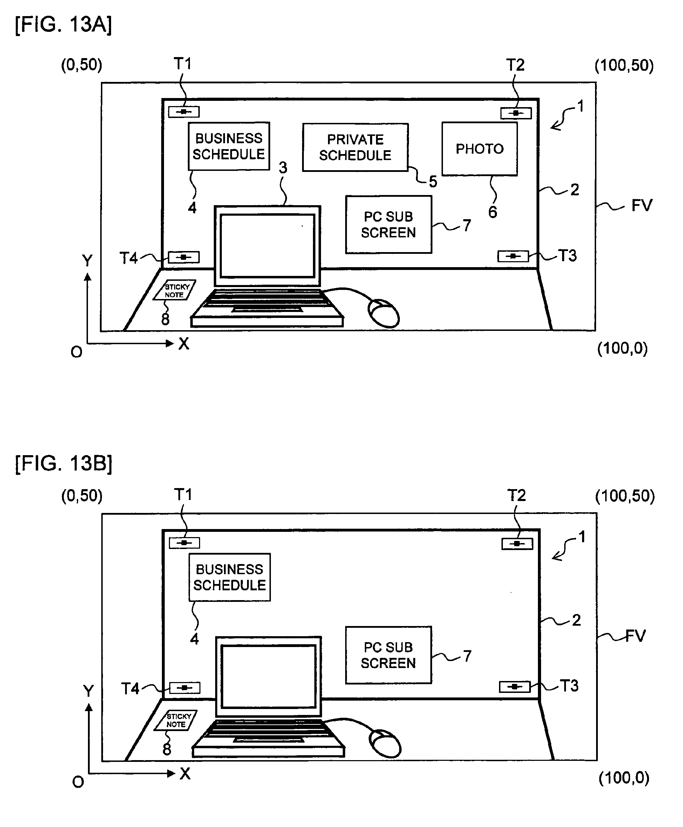

Figs. 13A and 13B are diagrams illustrating the field of view FV given by the display device 120 to the vision of the operator M when all the RFID tags T1 to T4 for display are detected through the antenna 110 of the display processor 100 (in other words, when all the RFID tags T1 to T4 for display are present in the communication region S) in this variation, in which Fig. 13A illustrates a case of the operator M, which is a user of the desk 1 and Fig. 13B illustrates a case of the operator M, who is not a user of the desk 1. In Figs. 13A and 13B, the same reference numerals are given to the portions similar to those in the above-mentioned Fig. 9, and the description will be omitted.

Fig. 13A is shown for comparison with Fig. 13B and has the contents similar to the above-mentioned Fig. 9. That is, if the operator M, who is the user of the desk 1, wears the display processor 100, all the image data of the business schedule 4, the private schedule 5, the photo 6, the PC sub screen 7, and the sticky note 8 are displayed on the projection board 2.

On the other hand, as shown in Fig. 13B, if the operator M, who is not the user of the desk 1, wears the display processor 100, the image data relating to the business schedule 4, the PC sub screen 7, and the business of the sticky note 8 are displayed on the projection board 2 but the private schedule 5 and the photo 6, which are private information of the operator M, who is the user of the desk 1, are not displayed.

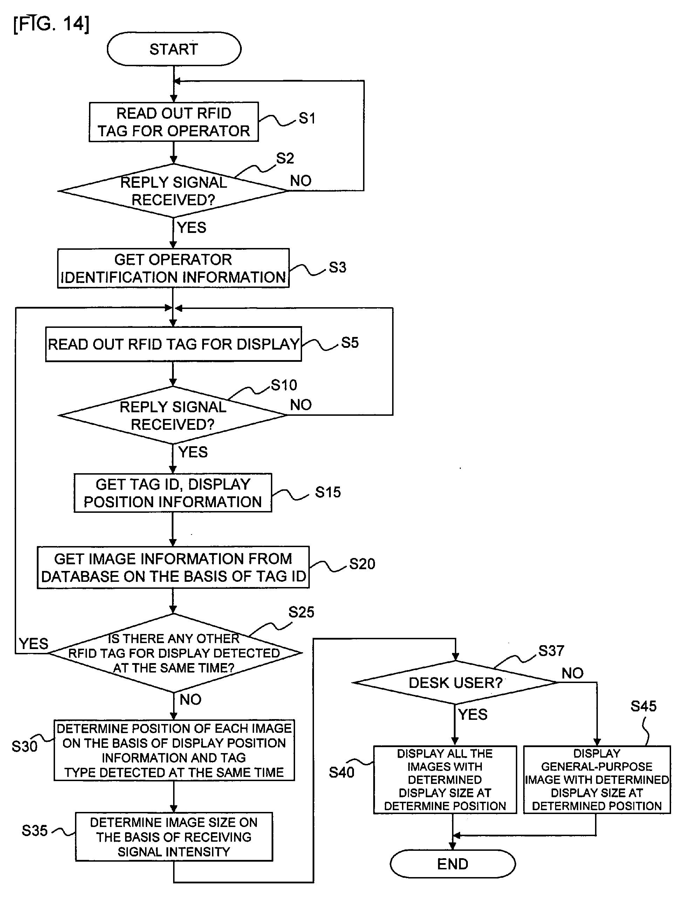

Fig. 14 is a flowchart illustrating control contents executed by the control circuit 133 of the display processor 100 in this variation. In Fig. 14, the same reference numerals are given to the procedures similar to those in the above-mentioned Fig. 12, and the description will be omitted.

At Step S1, the control circuit 133 transmits a control signal to the transmitting portion 142 of the radio frequency circuit 131, generates a carrier wave in a UHF band, for example (915 MHz, for example) from the crystal oscillator 145A, the PLL 145B, and the VCO 145C, modulates and amplifies the carrier wave generated on the basis of the control signal and transmits a read-out signal to the IC circuit part 150 of the RFID circuit element To of a RFID tag Tm for operator (not shown) held by the operator M through the transmit-receive splitter 144 and the antenna 110. The read-out of the RFID tag Tm for operator may be carried out by the operator M, for example, taking the RFID tag Tm by hand and holding it in the communication region S of the antenna 110 and the like. The RFID tag Tm for operator has the configuration similar to that of the above-mentioned RFID tag T for display (T1 to T4).

At Step S2, the control circuit 133 determines if a reply signal (response signal) corresponding to the read-out signal has been received from the IC circuit part 150 of the RFID circuit element To of the RFID tag Tm for operator present in the communication region S or not. If the signal has not been received, the determination is not satisfied, and the routine returns to Step S1. On the other hand, if the signal has been received, the determination is satisfied, and the routine goes to Step S3.

At Step S3, the control circuit 133 gets operator identification information (name, employee number and the like, for example) stored in the IC circuit part 150 of the RFID circuit element To of the corresponding RFID tag Tm for operator on the basis of the reply signal received at Step S2. The operator identification information stored in the RFID circuit element To may be a tag ID associated with the operator identification information or the operator identification information itself.

Since Step S5 to Step S35 are the same as those of the above-mentioned Fig. 12, the description will be omitted.

At Step S37, the control circuit 133 determines if the operator M holding the display processor 100 is the user of the desk 1 or not on the basis of the operator identification information gotten at Step S3. If the operator is the user, the routine goes to Step S40, and the control circuit 133 outputs a display signal to the display control portion 121 of the display device 120 on the basis of all the image data obtained at Step S20 and the display position and the display size determined at Step S30 and Step S35. As a result, in the field of view FV of the display device 120, all the image data is visualized and displayed. Then, this flow is finished.

On the other hand, at Step S37, if the operator M is not the user of the desk 1, the routine goes to Step S45, and the control circuit 133 outputs a display signal to the display control portion 121 of the display device 120 on the basis of the general-purpose image data, which is not the private information of the user of the desk 1 in the image data obtained at Step S20 and the display position and the display size determined at Step S30 and Step S35. As a result, in the field of view FV in the display device 120, the general-purpose image data, which is not the private information of the user of the desk 1 (See the above-mentioned Fig. 13B) is visualized and displayed. Then, this flow is finished.

In the above, Step S3 constitutes second information acquisition means configured to get the identification information of the corresponding operator from the plurality of RFID tags for operator associated with the plurality of operators, respectively, through the antenna means described in each claim, and Step S30, Step S35, and Step S37 constitute display mode control means configured to generate a display signal so that a display mode of a predetermined display image in a predetermined field of view is changed according to the image related information and display position information gotten by the first information acquisition means and the identification information of the operator gotten by the second information acquisition means. Further, Step S40 and Step S45 as well as the Step S30, Step S35, and Step S37 constitute display signal creating means

According to the variation described above, display/non-display can be switched according to who the operator M is. As a result, since the non-display setting of the private information can be made, the privacy information of the operator M can be displayed safely. Also, as a result, sharing of the projection board 2 by a plurality of the operators M can be surely realized.

In the above, only display/non-display are switched according to who the operator M is, but it may be so configured that the display mode (display size, display position and the like) is changed according to the operator M. In this case, individual customization is made possible for each operator M, and the convenience can be further improved.

### (2) Variation of image data arrangement

Arrangement of the image data in the projection board 2 of the desk 1 is not limited to that in the above embodiment but capable of various arrangements.

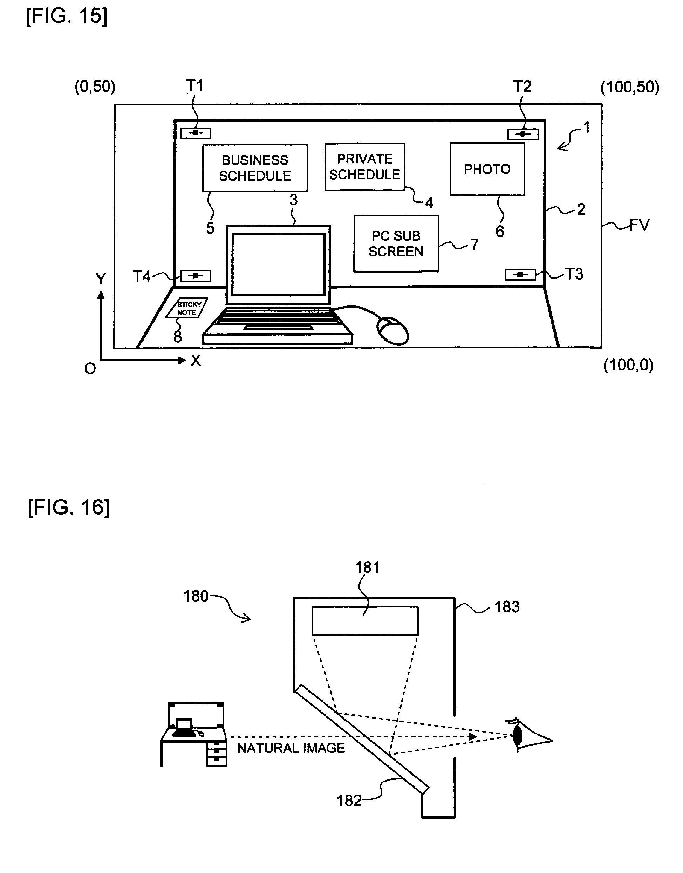

Fig. 15 is a diagram illustrating an example, and in comparison with the above-mentioned Fig. 9, the arrangement of the business schedule 4 and the private schedule 5 are reversed. In this case, the correlation between the RFID tag for display and the image data is not changed (that is, the RFID tag T1 for display stores the image data (tag ID) of the business schedule 4 and the RFID tag T2 for display stores the image data (tag ID) of the private schedule 5 and the photo 6), but the display position information (coordinates) of the RFID tags T1 and T2 for display are changed. Alternatively, the correlation between the RFID tag for display and the image data is changed (that is, the RFID tag T1 for display stores the image data (tag ID) of the private schedule 5 and the RFID tag T2 for display stores the image data (tag ID) of the business schedule 4 and the photo 6), and the display position information (coordinates) may be similar to Fig. 9.

### (3) variation of the display device

In the above, a retinal scanning display is used as the display device 120, but any other display device may be used as long as it is a so-called wearable type transparent display that can be worn by the body of the operator M.

Fig. 16 is a diagram conceptually illustrating a configuration of the reflection type head-mount display, which is an example of other display devices.

A display device 180 of this variation has an image display portion 181 configured to display a created image, a half mirror 182 having a nature of transmitting a visible ray and reflecting a ray with a specific wavelength or band, and an enclosure 183 provided with the image display portion 181 and the half mirror 182. In the display device 180, the operator M can see the natural image in the field of view FV, transmitted through the half mirror 182, and can see the image data superimposed on the natural image in the field of view FV since the image data displayed on the image display portion 181 on the basis of control of the control circuit 133 is reflected by the half mirror 182 to the operator M side. By using the display device 180 with the above configuration, the effect similar to that of the above embodiment and the like can be obtained.

### (4) Others

Though not particularly described in the above, it may be so configured that a RFID tag Tp for position identification (not shown) corresponding to a construction (floor, column, wall face and the like) or a fixed object (desk, book shelf and the like) is provided in advance so that the information read-out is carried out for the RFID tag Tp for position identification in the display processor 100 and the position information is gotten, for example. As a result, the display/non-display, display size, display position and the like can be changed also according to where the spot is located (or where the operator M is located). As a result, individual customization according to the spot is made possible, and the convenience can be further improved.

According to the variation, even if power goes down in an office in the midnight, for example, it becomes possible to project what is arranged where by reading out the RFID tag Tp for position identification and the RFID tag T for display, and the operator M can walk safely. Moreover, by providing the RFID tags T for display associated with a guidance image (arrows and the like) with a predetermined interval, for example, the operator M can confirm the guidance image displayed with the optimal size/display position, and rapid and safe evacuation can be realized especially during evacuation guidance and the like.

Though not particularly described using a flowchart, the procedure to get the position information from the RFID tag Tp for position identification by the control circuit 133 in the above variation constitutes third information acquisition means configured to get corresponding position information from the RFID tag for position identification associated with the construction or fixed object through the antenna means described in each claim.

Also, in the above, the tag ID associated with the image data is stored in the RFID circuit element To as the image related information, and the image data is obtained by searching the database 300 on the basis of the tag ID obtained from the RFID circuit element To but not limited to that, it may be so configured that the RFID circuit element To stores the image data itself as the image related information.

Also, in the above, the display position of the image in the field of view FV of the operator M is changed for each of the RFID tags T1 to T4 for display according to the result of the information read-out, whether it was successful or not, but it may be so configured that the display size is changed according to the result of information read-out, whether it was successful or not, such that if the number of RFID tags T with successful read-out is smaller, it is considered that the operator M is closer to the projection board 2, and the display size is magnified and the like, for example. Also, in the above, the display size of the image data in the field of view FV is changed according to the distance from the operator M of the projection board 2 (receiving signal intensity), but it may be so configured that the display position is changed according to the distance from the operator M of the projection board 2 (receiving signal intensity) such that the closer the operator M gets to the projection board 2, the display position of the image is brought toward the outer circumference side of the field of view FV, while the farther the operator M gets from the projection board 2, the display position is brought to the center side of the field of view FV and the like, for example.

Also, in the above, the case in which the display processing system of the present invention is applied to a display processing system for displaying the image data superimposed on the projection board provided at the desk is described as an example, but not limited to that, the present invention can be applied to various scenes such as display of various types of information in a signboard or a guidance board, for example.

The flowchart described in the present description does not limit the present invention to the procedure illustrated in the flow chart but is capable of addition/deletion or change and the like of the procedures in the range not departing from the gist and the technical idea of the invention. Moreover, in the functional block diagram described in the present description, the arrows in the figures show an example of a flow direction of the signals and do not limit the flow direction of the signals only to the arrow directions.

Also, other than the above described, methods by the above embodiments and each variation may be combined as appropriate for use.

Though not individually exemplified, the present invention is put into practice with various changes in a range not departing from its gist.

## Claims

1. A display processor (100) comprising:
transparent display means (120) configured to be capable of giving a predetermined field of view (FV) including a natural image of a predetermined virtual projection portion (2) to a vision of an operator (M) and to be held on a head portion of said operator (M);
antenna means (110) configured to carry out radio communication with at least one RFID tag (T1-T4) for display, arranged on said virtual projection portion (2) or in the vicinity of said virtual projection portion (2), each of said RFID tag (T1-T4) for display storing image related information for displaying at least one predetermined display image in said predetermined field of view (FV);
first information acquisition means (S15) configured to get said image related information via radio communication through said antenna means (110); and
display signal creating means (S30, S35, S40; S30, S35, S37, S40, S45) configured to create a display signal for displaying said predetermined display image by means of said display means (120) so as to be superimposed on a natural image of said virtual projection portion (2) in said predetermined field of view (FV) on the basis of said image related information gotten by said first information acquisition means (S15).

2. The display processor (100) according to claim 1, **characterized in that**:
said first information acquisition means (S15) gets display position information corresponding to a display position of said display image in said predetermined field of view (FV), said display position information stored in said RFID tag (T1-T4) for display through said antenna means (110); and
said display signal creating means (S30, S35, S40; S30, S35, S37, S40, S45) creates said display signal for displaying said predetermined display image at said display position in said predetermined field of view (FV) on the basis of said image related information and said display position information gotten by said first information acquisition means (S15).

3. The display processor (100) according to claim 2, **characterized in that**:
said display signal creating means (S30, S35, S40; S30, S35, S37, S40, S45) includes display mode control means (S30, S35; S30, S35, S37) configured to create said display signal so that a display position or a display size of said predetermined display image in said predetermined field of view (FV) changes according to a distance or a direction between said operator (M) and said virtual projection portion (2).

4. The display processor (100) according to claim 3, **characterized in that**:
a plurality of said RFID tags (T1-T4) for display are arranged at predetermined positions on said virtual projection portion (2) or in the vicinity of said virtual projection portion (2); and
said display mode control means (S30, S35; S30, S35, S37) creates said display signal so that said display position or said display size of said predetermined display image in said predetermined field of view (FV) changes according to an information acquisition result by said first information acquisition means (S15) with respect to said plurality of RFID tags (T1-T4) for display.

5. The display processor (100) according to claim 4, **characterized in that**:
said display mode control means (S30, 535; S30, S35, S37) creates said display signal so that said display position or said display size of said predetermined display image in said predetermined field of view (FV) changes according to an arrangement position of said RFID tag (T1-T4) for display for which information acquisition by said first information acquisition means (S15) was successful among said plurality of RFID tags (T1-T4) for display.

6. The display processor (100) according to claim 4 or 5, **characterized in that**:
said display mode control means (S30, S35; S30, S35, S37) creates said display signal so that said display position or said display size of said predetermined display image in said predetermined field of view (FV) changes according to receiving signal intensity when information was successfully gotten by said first information acquisition means (S15) from said RFID tag (T1-T4) for display.

7. The display processor (100) according to any one of claims 3 to 6, further comprising second information acquisition means (S3) configured to get operator identification information from at least one of a plurality of RFID tags (Tm) for operator through said antenna means (110), each of said plurality of RFID tags (Tm) for operator associated with a corresponding operator (M), **characterized in that**:
said display mode control means (S30, S35, S37) creates said display signal so that said display mode of said predetermined display image in said predetermined field of view (FV) changes according to both said image related information and said display position information gotten by said first information acquisition means (S15) and said operator identification information gotten by said second information acquisition means (S3).

8. The display processor (100) according to any one of claims 3 to 7, further comprising third information acquisition means configured to get position identification information from a RFID tag (Tp) for position identification through said antenna means (110), said RFID tag (Tp) for position identification associated with a construction or a fixed object, **characterized in that**:
said display mode control means (S30, S35; S30, S35, S37) creates said display signal so that said display mode of said predetermined display image in said predetermined field of view (FV) changes according to both said image related information and said display position information gotten by said first information acquisition means (S15), and at least one of said operator identification information gotten by said second information acquisition means (S3) and said position identification information gotten by said third information acquisition means.

9. A display processing system (TS) comprising:
transparent display means (120) configured to be capable of giving a predetermined field of view (FV) including a natural image of a predetermined virtual projection portion (2) to a vision of an operator (M) and to be held on a head portion of said operator (M);
at least one RFID tag (T1-T4) for display configured to store tag identification information (ID1-ID4) respectively, arranged at said virtual projection portion (2) or in the vicinity of said virtual projection portion (2);
a database (300) configured to store both said tag identification information (ID1-ID4) and image information for displaying at least one predetermined display image in said predetermined field of view (FV) in association with each other, said image information corresponding to the RFID tag (T1-T4) for display storing said tag identification information (ID1-ID4);
antenna means (110) configured to carry out radio communication with said at least one RFID tag (T1-T4) for display;
tag identification information acquisition means (S15) configured to get said tag identification information (ID1-ID4) via radio communication through said antenna means (110) ; and
image information acquisition means (S20) configured to access said database on the basis of said tag identification information (ID1-ID4) gotten by said tag identification information acquisition means (S15) and get corresponding said image information, **characterized in that**:
said display means (120) displays said predetermined display image so as to be superimposed on a natural image of said virtual projection portion (2) in said predetermined field of view (FV) on the basis of said image information gotten by said image information acquisition means (S20).
